**Europäisches Patentamt**

**European Patent Office**

**Office européen des brevets**

(11) Publication number: **0 173 044**
**B1**

# EUROPEAN PATENT SPECIFICATION

(45) Date of publication of patent specification: **16.05.90**

(51) Int. Cl.⁵: **B 60 N 2/02**

(21) Application number: **85108712.2**

(22) Date of filing: **12.07.85**

(54) **A rotation adjusting apparatus.**

(30) Priority: **31.08.84 JP 182144/84**
**28.03.85 JP 64559/85**

(43) Date of publication of application:
**05.03.86 Bulletin 86/10**

(45) Publication of the grant of the patent:
**16.05.90 Bulletin 90/20**

(84) Designated Contracting States:
**DE FR GB IT**

(56) References cited:
**DE-A-2 335 795**
**DE-A-3 333 056**
**GB-A-2 019 207**
**GB-A-2 120 092**

(73) Proprietor: **TACHIKAWA SPRING CO., LTD.**
**2-12, Matsubara-cho 3-chome**
**Akishima-shi Tokyo (JP)**

(72) Inventor: **Suzuki, Hiroshi TACHIKAWA SPRING**
**Co. Ltd.**
**2-12, Matsubara-cho 3-chome**
**Akishima-shi Tokyo (JP)**
Inventor: **Kanai, Masatatsu TACHIKAWA**
**SPRING Co. Ltd.**
**2-12, Matsubara-cho 3-chome**
**Akishima-shi Tokyo (JP)**
Inventor: **Saitho, Seishiro TACHIKAWA SPRING**
**Co. Ltd.**
**2-12, Matsubara-cho 3-chome**
**Akishima-shi Tokyo (JP)**
Inventor: **Kanai, Shigeru TACHIKAWA SPRING**
**Co. Ltd.**
**2-12, Matsubara-cho 3-chome**
**Akishima-shi Tokyo (JP)**

(74) Representative: **Tetzner, Volkmar, Dr.-Ing. Dr.**
**jur.**
**Van-Gogh-Strasse 3**
**D-8000 München 71 (DE)**

Courier Press, Leamington Spa, England.

## Description

The invention relates to a seat adjusting apparatus, especially for adjusting the height or the angle of an automible seat.

In a known seat adjusting apparatus (JA—A—29 827/1984) hinge arms provided in the front and rear of the seat frame are pivoted to leg members which are fixed at the floor. The seat frame is moved up and down by the force acting on the hinge arms. The height of the seat can be adjusted by an operating apparatus which is coupled to the hinge arm and which is provided with a friction brake. This friction brake includes a brake drum which is fixed to a seat frame in which is provided a leather plate fixed to a drive shaft supported at a center opening of a drum bottom wall and a hanger engaged with the drive shaft so as to be rotatable and which is fixed to a shaft to be driven through a serration. A handle is fixed to the drive shaft and a coupling member for a seat lifting mechanism is attached to the shaft to be driven. A pair of guides are provided between the lever plate and the hanger and the both guides are coupled to both ends of a brake spring that is urged against the inner peripheral surface of the brake drum. There is provided a contact portion. This contact portion contacts with the hanger to thereby inhibit the hanger from moving when the lever plate is stopped. Further, there is provided a cam portion which is engaged with the lever plate when the lever plate is rotated. According to this friction brake apparatus, upon the initial rotation of the lever plate, the contact portion is swayed by the engagement between the cam portion and the lever plate to thereby release from contacting with the hanger and thus a spacing or clearance is formed between the contact portion and the hanger. By this clearance, the diameter of the brake spring is reduced to decrease its force contacting with the inner peripheral surface of the brake drum so that the friction brake is released, thus the shaft to be driven being made able to rotate.

In this prior art friction brake apparatus, the shaft to be driven is friction-locked by contacting the brake spring with the inner peripheral surface of the brake drum so that when a large load acts in the downward direction such as an impact force applied to the seat and hence the shaft to be driven is applied with a rotation force, the brake spring is slidably moved within the brake drum and thus there is a fear that the seat will be moved downward beyond the predetermined height. Further, since the brake operation is carried out by increasing or decreasing the winding diameter of the brake spring, it is very difficult to precisely lock the seat at a desired height. In addition, upon operation, a so-called dragging phenomenon in which the brake spring is slidably moved in contact with the inner peripheral surface of the brake drum will occur. There is then a defect that the operation is not carried out smoothly.

Another seat adjusting apparatus is known from DE—A—2 335 795 comprising
—a stationary base bracket,
—a latch gear provided at a pivotable latch,
—a lock gear rotatably supported by said base bracket and engagable with said latch gear,
—a guide bracket rotatably supported by said base bracket,
—a pivotable handle supported by said base bracket
—and means for coupling said guide bracket to said lock gear.

It is an object of the invention to provide a seat adjusting apparatus in which the lock releasing operation and the rotation adjusting operation can be carried out smoothly and which is of simple construction with a reduced number of parts and a small space.

This invention is solved by a seat adjusting apparatus comprising features a) to g) of claim 1.

Improvements of this seat adjusting apparatus are subject of subclaims 2 to 6.

Brief description of the drawings

Fig. 1 is a longitudinally cross-sectional outer side view of a first embodiment of a rotation adjusting apparatus according to the present invention;

Fig. 2 is an exploded perspective view of the rotation adjusting apparatus of Fig. 1;

Figs. 3 and 4 are respectively longitudinally inner side views useful for explaining the operation state of the apparatus shown in Fig. 1;

Fig. 5 is a side view illustrating a seat of the automobile having the rotation adjusting apparatus of the invention shown in Fig. 1;

Fig. 6 is a partly exploded perspective view illustrating a cushion frame portion of the seat shown in Fig. 5;

Fig. 7 is a longitudinally cross-sectional outer side view of a second embodiment of the rotation adjusting apparatus according to the present invention;

Fig. 8 is an exploded perspective view of the apparatus of Fig. 7;

Figs. 9A and 9B are respectively longitudinally cross-sectional inner side views useful for explaining the operation state of the apparatus shown in Fig. 7;

Fig. 10 is a perspective view of a third embodiment of the rotation adjusting apparatus according to the present invention in which a part thereof is omitted; and

Figs. 11A and 11B are respectively side views of a main part of the apparatus of Fig. 10 useful for explaining the operation thereof.

Description of the preferred embodiments

Now, the present invention will hereinafter be described in detail with reference to the attached drawings.

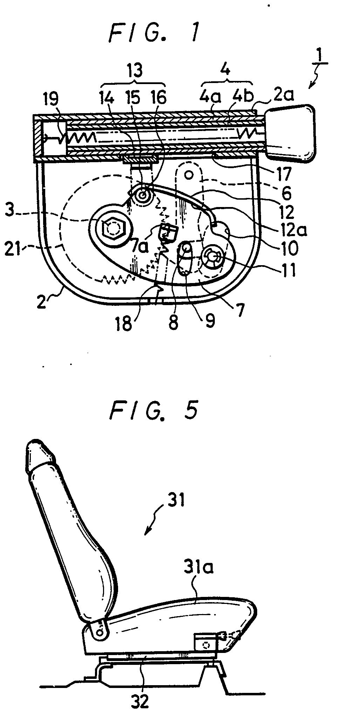

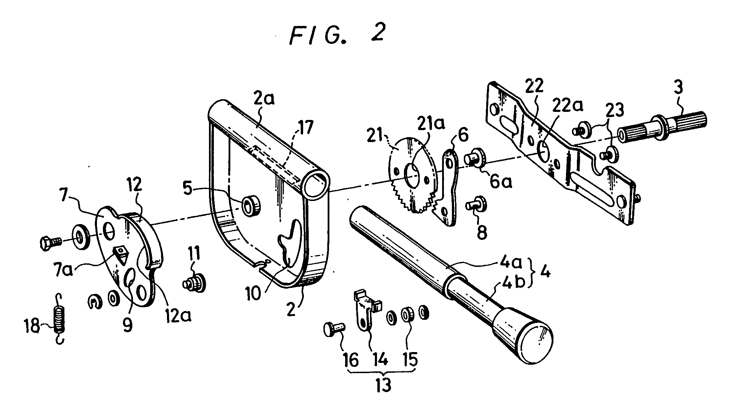

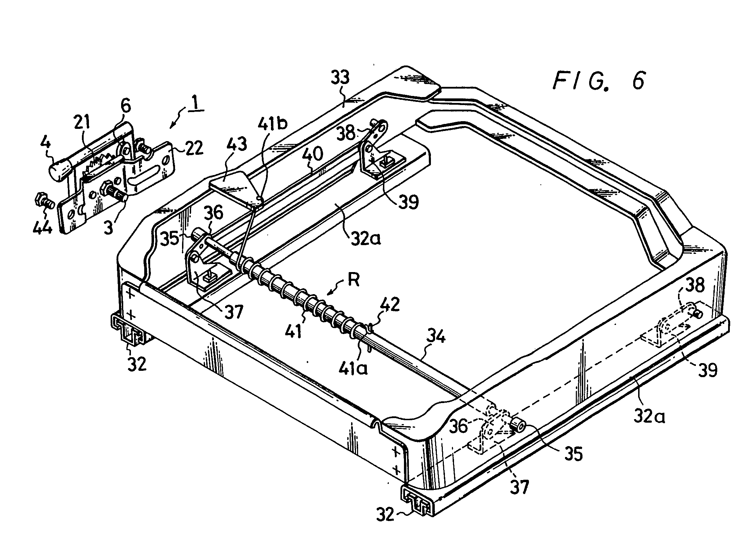

Figs. 1 to 4 are respectively diagrams showing a first embodiment of a rotation adjusting apparatus according to this invention. Fig. 5 is a diagram showing an example of a seat of automobile in which the rotation adjusting apparatus of the invention is used as a seat height adjusting apparatus. Fig. 6 is a diagram showing the state that the rotation adjusting apparatus of the invention is attached to a cushion frame portion of the above-described seat of automobile.

In Figs. 1 to 4, reference numeral 1 generally designates a rotation adjusting apparatus and this rotation adjusting apparatus 1 is formed of a movable side member and a fixed side member. Reference numeral 2 designates a base bracket serving as a movable side member fixed to a shaft 3 to be driven that is coupled to, for example, a height adjusting apparatus which will be described later. This base bracket 2 is of a housing shape in which an edge frame is formed integral with its outer peripheral edge. On the upper edge portion of the base bracket 2, there is provided a guide cylindrical member 2a which accommodates therein a handle 4 that is formed by coupling an outer cylinder 4a and an inner cylinder 4b in a so-called telescope manner so as to become extendable. At substantially the center portion of the base bracket 2, there is fixedly inserted a bush 5 which is fixed to the shaft 3 to be driven through a serration. To the inner side surface of this base bracket 2 and at the portion thereof distant from the fixed portion of the shaft 3 to be driven, there is pivoted a lock gear 6 through a pin 6a that is meshed with a fixed gear which will be described later. To the outer side surface of the base bracket 2, there is provided a guide bracket 7 which is engaged with the lock gear 6 to thereby become rotatable around the bush 5. The lock gear 6 and the guide bracket 7 are engaged with each other by inserting a pin 8 erected on the lock gear 6 into a deformed long opening 9 formed through the guide bracket 7 through a guide groove 10 that is formed through the base bracket 2. At the point portion of the guide bracket 7, there is protruded a roller pin 11 that is slid along the outer edge side, or the side edge portion opposing to the engaged portion of the lock gear 6 in accordance with the rotation of the guide bracket 7.

On the upper edge of this guide bracket 7, there is protrusively formed a cum piece member 12 and this cum piece member 12 slidably contacts with a slide member 13 which us attached to the outer cylinder 4a of the handle 4. This slide member 13 is formed such that a roller 15 is pivoted to a bracket 14, which is fixed to the outer cylinder 4a of the handle 4, by a pin 16 in a cantilever fashion. The bracket 14 is protruded into the base bracket 2 through a long opening 17 formed in the axial direction of the guide cylindrical portion 2a of the base bracket 2 to thereby rotatably contact the roller 15 with an under cum surface 12a of the cum piece member 12 of the guide bracket 7.

In the guide bracket 7, a coil spring 18 is stretched between an erected piece member 7a protruded at substantially the center portion of the guide bracket 7 and the lower edge of the base bracket 2 to thereby always bias the lock gear 6 so as to become rotatable to the direction of a fixed gear which will be described later. In order for the handle 4 to be always accommodated in the guide cylindrical portion 2a of the base bracket 2, a spring 19 is tensioned between the point of the inner cylinder 4b and the rear end of the guide cylindrical portion 2a.

Reference numeral 21 designates a fixed gear which is used as the fixed side member. This fixed gear 21 is fixed to a fixed member such as a cushion frame and so on through a mounting bracket 22 so as to become coaxial with the above-described shaft 3 to be driven. More particularly, an insertion opening 21a for the shaft 3 to be driven is formed through the center of the fixed gear 21 and an insertion opening 22a is formed through the mounting bracket 22, in which under the state that the both openings 21a and 22a are made coincident with each other, the fixed gear 21 and the mounting bracket 22 are coupled with each other by rivets 23 to thereby fix the mounting bracket 22 to the fixed member.

Then, the operation of the rotation adjusting apparatus 1 which is formed of the movable side member and the fixed side member will be described below.

Under the state that the handle 4 is shortened and accommodated into the guide cylindrical portion 2a of the base bracket 2, the bracket 14 that is attached to the outer cylinder 4a as the slide member is in the backward position so that the roller 15 pivoted to the bracket 14 is rotatably contacted with the cum surface 12a of the cum piece member 12 of the guide bracket 7 at its rear end portion, or the pivoted portion side of the guide bracket 7. Accordingly, the guide bracket 7 is rotatably biased downward by the spring 18 and the lock gear 6 that is to be engaged through the pin 8 with the guide bracket 7 is engaged with the fixed gear 21 (in the state of Fig. 1) under the state that the roller pin 11 is rotatably contacted with the outer edge side of the point portion of the lock gear 6, thus the base bracket 2 being made unable to rotate and the shaft 3 to be driven being put in the locked state.

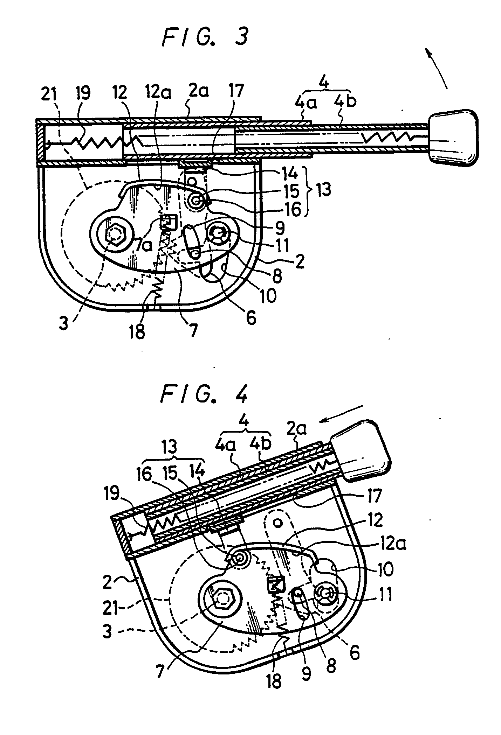

From this state, if the handle 4 is extended or drawn out from one guide cylindrical portion 2a, the bracket 14 is moved forward. Then, the roller 15 is rotated and moved forward in contact with the cum surface 12a of the cum piece member 12 of the guide bracket 7 so that the cum piece member 12 is applied with a lifting force. Consequently, the guide bracket 7 is rotated upwards around the pivoted portion of the bush 5 against the biasing force of the spring 18 so that the pin 8 of the lock gear 6 is pressed by the edge portion of the deformed long opening 9 and thus the lock gear 6 is rotated in the backward direction, or in the direction becoming remote from the fixed gear 21. As a result, the lock gear 6 is released from being engaged with the fixed gear 21 and the shaft 3 to be driven is released from locking (see Fig. 3).

Under this state, if the handle 4 is lifted upward or lowered, the shaft 3 to be driven is rotated through the base bracket 2 to thereby operate the adjusting mechanism which is coupled to the shaft 3 to be driven.

Under the state that the shaft 3 to be driven is rotated by a desired amount, if the handle 4 is released from the hand, the handle 4 is shortened by the biasing force of the spring 19 and then accommodated into the guide cylindrical portion 2a. In other words, while the inner cylinder 4b being inserted into the outer cylinder 4a, the outer cylinder 4a is inserted into the guide cylindrical portion 2a and thereby accommodated thereinto.

By virtue of this operation, the bracket 14 is moved backward to thereby rotate and move the roller 15 backward along the cum surface 12a of the cum piece member 12 of the guide bracket 7, thus releasing the cum piece member 12 from being lifted up. Consequently, as the guide bracket 7 is rotated downward by the biasing force of the spring 18 and then returned to the original position, the lock gear 6 is rotated forward by the engagement between the pin 8 and the long opening 9 and then engaged with the fixed gear 21 so that the shaft 3 to be driven is locked under being rotated as earlier noted and thus the adjusting mechanism being held in its operation state (see Fig. 4).

If the rotation adjusting apparatus 1 is further changed from this operation state or returned to the original state once again, the lock releasing operation and the rotation operation of the aforementioned shaft 3 to be driven must be carried out.

In the above-described arrangement, since the slide member 13 which is attached to the handle 4 and is in slidable contact with the cam suface 12a of the cum piece member 12 of the guide bracket 7 is formed by pivoting the roller 15 to the bracket 14 and the roller 15 is rotatably moved in contact with the cum surface 2a of the cum piece member 12 of the guide bracket 7, in the lock releasing operation of the lock gear 6, the handle 4 can be slidably drawn out smoothly so as to rotate the guide bracket 7 and the sliding force of the handle 4 can be decreased because as the handle 4 is slidably drawn out, the roller 15 is moved in the front portion direction of the cum piece member 12, or the direction becoming remote from the pivoted portion of the guide bracket 7.

On the other hand, the guide bracket 7 is applied with a strong tension of the spring 18 in the direction opposite to the direction in which the guide bracket 7 is rotated by the movement of the roller 15, so that the increase of the tension and the decrease of the sliding force are cancelled out with each other and thus the sliding force, or the operating force of the handle 4 becomes always constant.

In the shortening operation of the handle 4, or the locking operation of the lock gear 6, a rotation force given by the spring 18 to the guide bracket 7 is added to the shortening operation force given by the spring 19 to the handle 4 via the roller 15 so that the handle 4 is rapidly shortened and in association therewith, the guide bracket 7 is rotated and then returned, thus the lock gear 6 being engaged with the fixed gear 21 serving as the fixed side member and the base bracket 2, which is being fixed to the shaft 3 to be driven, being once again locked to the fixed member.

While in the above-described embodiment the handle 4 is formed as the two-stage telescope type of the outer cylinder 4a and the inner cylinder 4b, it may be possible that the handle 4 is formed as a telescope-type of more than two stages. Further, the handle 4 may be formed as one rod-shape member or cylindrical shape member. When the handle 4 is formed by one rod-shape member, the handle extension length and the movable length of the bracket 14 as the slide member 13 for rotating the guide bracket 7 become equal to each other so that the handle extension or drawn out length can be made shorter than that of the telescope-type in a mechanical standpoint. Furthermore, the slide member 13 is not limited to such one that is formed by pivoting the roller 15 to the bracket 14 as mentioned above but may be such one that without the roller 15, the bracket 14 is slidably moved in direct contact with the cum piece member 12 of the guide bracket 7, with a similar operation being carried out. Further, the cum piece member 12 of the guide bracket 7 may be formed on the lower edge side thereof.

In addition, the positional relation of the lock gear 6 and the guide bracket 7 relative to the fixed gear 21 may be reversed, or they may be positioned at the front side of the fixed gear 21 and the tooth portion of the fixed gear 21 is not necessary formed around the whole of the periphery thereof but may be formed in accordance with the rotational range of the shaft 3 to be driven. Other portions and members are not limited to those of this embodiment but can take various modifications and variations.

Referring to Figs. 5 and 6, the rotation adjusting apparatus 1 that is arranged and operated as mentioned above will be described more fully in which case, it is used as, for example, an operating apparatus for the lifter mechanism of a seat of, for example, automobiles.

Fig. 5 shows the whole of the seat of automobile that is provided with the above-described rotation adjusting apparatus 1. In Fig. 5, reference numeral 31 generally designates a seat and this seat 31 is mounted through a slide rail 32 of a seat adjuster to the floor of a body of automobile.

Reference numeral 31a designates a seat cushion incorporating therein a lifter mechanism R which will be described later. When this lifter mechanism R is operated by the above-described rotation adjusting apparatus 1, the lifter mechanism R is moved up and down relative to the slide rail 32, thus adjusting the height of the seat cushion 31a.

Fig. 6 schematically illustrates that the lifter mechanism R is mounted to the seat cushion 31a, or a cushion frame 33. As shown in Fig. 6, respective members constituting the lifter mechanism R are located in the front and rear portions of the cushion frame 33 and the slide rail 32. More specifically, the front side members of the lifter mechanism R are such that a lifter operation shaft 34 is rotatably extended at the front portion of the cushion frame 33, the both ends of the lifter operation shaft 34 are supported by bearings 35 that are provided at the front portion of the both side portions of the cushion frame 33, arms 36 are fixed to the lifter operation shaft 34 at the positions inside the both side portions of the cushion frame 33 and the free ends of the arms 36 are pivoted to leg members 37. The leg members 37 are respectively fixed to the body floor side, or the upper rails 32a of the slide rail 32, in this embodiment, by fixed members such as bolts and nuts.

The rear side members of the lifter mechanism R are formed such that arms 38 are pivoted to the rear insides of both side portions of the cushion frame 33 and the free end portions of the arms 38 are pivoted to leg members 39. Also the leg members 39 are respectively fixed to the body floor side, or the rear portions of the upper rails 32a, in this example, by the fixing members. The leg members 37 and 39 are fixed to the upper rail 32a such that a straight line connecting the fixed point of the front side arm 36 to the lifter operation shaft 34, or its pivoted point to the cushion frame 33 side with the pivoted point of the arm 36 to the leg members 37 becomes parallel to a straight line connecting the pivoted point of the rear arms 38 to the cushion frame 33 side with its pivoted point to the leg members 39.

To substantially the intermediate portions of the front and rear members of the lifter mechanism R, or one arm in the front side and one arm in the rear side, the both ends of a coupling link 40 are respectively pivoted. Around the lifter operation shaft 34, there is wound a torsion spring 41, in which one end 41a thereof is engaged with a knock pin 42 protruded from the lifter operation shaft 34, while its other end 41b is engaged with a retainer 43 protruded on one side portion of the cushion frame 33, thus giving a biasing force to the lifter operation shaft 34 so as to urge the arm 36 to rotate around its pivoted portion to the leg portion 37 in the erecting direction. The rotation of the arm 36 is transmitted through the coupling link 40 to the arm 38 of the rear portion and thus the arm 38 is rotated around its pivoted portion to the leg member 39 in the erecting direction so that the cushion frame 33 is always biased in the rising direction relative to the slide rail 32.

As the operating apparatus of the lifter mechanism R for biasing the cushion frame 33 in the upward direction as set forth above, the above-described rotation adjusting apparatus 1 is mounted in response to the end portion of the lifter operation shaft 34 in the outside surface of one side of the cushion frame 33.

More particularly, under the state that the end portion of the shaft 3 to be driven protruded from the insertion opening of the bracket 22 is coupled to the lifter operation shaft 34 through the serration, the mounting bracket 22 with the fixed gear 21 attached thereto is fixed to the outer side surface of the cushion frame 33 by a fixing member 44 such as bolts and nuts.

Operating the rotation adjusting apparatus 1 mounted to the lifter mechanism R as mentioned above, the lifter mechanism R is operated and/or locked so that the height of the cushion frame 33 can be variably adjusted.

That is, when the rotation adjusting apparatus 1 is operated as mentioned above, or if the lock gear 6 is made apart from the fixed gear 21 by drawing out the handle 4 to thereby release the shaft 3 to be driven from locking, the lifter mechanism R is lifted by the biasing force to thereby lift up the cushion frame 33. Then, the handle 4 is returned to the original condition at the desired height of the frame 33, the lock gear 6 is engaged with the fixed gear 21 and the shaft 3 to be driven is locked, thus the cushion frame 33 being held at the desired height. As described above, it is possible to variably adjust the height of the seat 31 as is desired.

In this case, if in the above-mentioned lifter mechanism R the arm 38 of the rear side and the coupling link 40 are removed and the rear portion of the cushion frame 33 is directly pivoted to the rear leg member 39, a tilt mechanism is formed so that by the rotation of the above-described lifter operation shaft 34, it becomes possible to adjust the height of only the front side of the cushion frame 33, or the inclination angle of the seat cushion 31a.

The lifter mechanism R and the tilt mechanism to which the rotation adjusting apparatus 1 of this invention is applied are not limited to the above-described ones but may be such mechanisms having a lifter operation shaft that is always rotatably biased in one direction by biasing means.

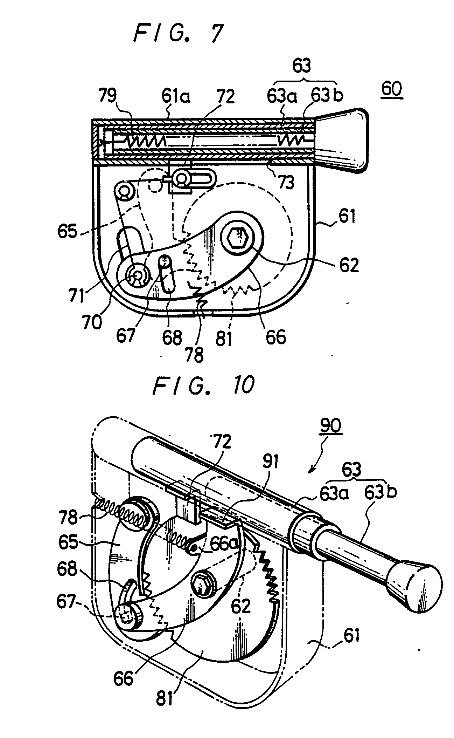

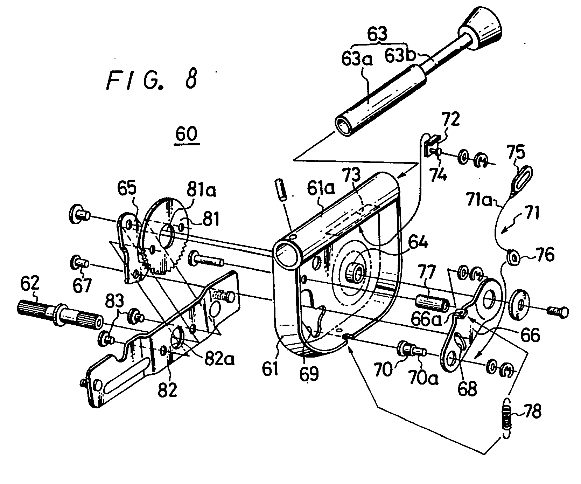

Figs. 7 to 9 are respectively diagrams showing a second embodiment 60 of the rotation adjusting apparatus according to the present invention. The rotation adjusting apparatus 60 shown in Figs. 7 to 9 is formed of a movable side member and a fixed side member. Reference numeral 61 designates a base bracket serving as the movable side member fixed to a shaft 62 to be driven that is coupled to, for example, a height adjusting apparatus which will be described later. This base bracket 61 is of a housing shape in which an edge frame is formed integral therewith on its outer peripheral edge. On the upper edge portion of the base bracket 61 there is provided a guide cylindrical member 61a which accommodates therein a handle 63 that is formed by coupling an outer cylinder 63a and an inner cylinder 63b in a so-called telescope manner so as to become extendable. At substantially the center portion of the base bracket 61, there is fixedly inserted a bush 64 which is fixed to the shaft 62 to be driven through a serration. To the inner side surface of this base bracket 61 and at the portion thereof distant from the fixed portion of the shaft 62 to be driven, there is pivoted a lock gear 65 that will be meshed with a fixed gear which will be described later. To the outer side surface of the base bracket 61, there is provided a guide bracket 66 which is engaged with the lock gear 65 to be rotatable around the bush 64. The lock gear 65 and the guide bracket 66 are engaged with each other by such a manner that a pin 67 erected on the lock gear 65 is inserted into a deformed long opening 68 formed through the guide bracket 66 through a guide groove 69 that is formed through the base bracket 61. At the point portion of the guide bracket 66, there is protruded a roller pin 70 that is slid along the outer edge side of the lock gear 65 or its side edge portion opposing to the engaged portion in accordance with the rotation of the guide bracket 66.

The guide bracket 61 is coupled through a wire assembly 71 to the outer cylinder 63a of the handle 63. More particularly, a protrusion piece member 72 is protruded on the outer cylinder 63a of the handle 63 and extended from a long opening 73 in the axial direction formed through the guide portion 61a to the inside of the base bracket 61. A pin 74 is protrusively formed on the protrusion piece member 72 and engaged with a long opening ring 75 of a predetermined length fixed to one end of the wire assembly 71. On the other hand, under the state that the intermediate portion of a wire portion 71a of the wire assembly 71 is wound around a guide pin 77 protruded in the outer side surface of the base bracket 61, a ring 76 fixed to the other end of the wire portion 71a of the wire assembly 71 is engaged with the pin 70a formed integral with the roller pin 70 that is protrusively formed on the point portion of the guide bracket 66, thus the guide bracket 66 being coupled to the handle 63. A coil spring 78 is stretched between an erected piece member 66a protruded at the rear edge side of the guide bracket 66 and the lower edge of the base bracket 61 to thereby bias the guide bracket 61 such that the lock gear 65 is rotated always in the direction to a fixed gear which will be described later. In order for the handle 63 to be always accommodated in the guide cylindrical portion 61a of the base bracket 61, a spring 79 is tensioned between the point of the inner cylinder 63b and the rear end of the guide cylindrical portion 61a.

Reference numeral 81 designates a fixed gear which is used as the fixed side member. This fixed gear 81 is fixed to a fixed member such as a cushion frame and so on through a mounting bracket 82 so as to become coaxial with the above-described shaft 62 to be driven. More particularly, an insertion opening 81a for the shaft 62 to be driven is formed through the center of the fixed gear 81 and an insertion opening 82a is formed through the mounting bracket 82, in which under the condition that the both opening 81a and 82a are made coincident with each other, the fixed gear 81 and the mounting bracket 82 are coupled with each other by rivets 83 to thereby fix the mounting bracket 82 to the fixed member.

Then, the operation of the rotation adjusting apparatus 60 which is formed of the movable side member and the fixed side member will be described below.

Under the condition that the handle 63 is shortened and accommodated into the guide cylindrical portion 61a of the base bracket 61, the protruded piece member 72 from the outer cylinder 63a is in the backward direction and the pin 74 protruded therefrom is in the position corresponding to the rear end portion of the long opening ring 75 of the wire assembly 71 so that no traction is applied to the wire asembly 71. Accordingly, under this state, the guide bracket 66 is rotatably biased downward by the spring 78 and the lock gear 65 that is to be engaged through the pin 67 with the guide bracket 66 is engaged with the fixed gear 81 (in the state of Fig. 7) under the state that the roller pin 70 is rotatably contacted with the outer edge side of the point portion of the lock gear 65, thus the base bracket 61 being made unable to rotate and the shaft 62 to be driven being put in the locked state.

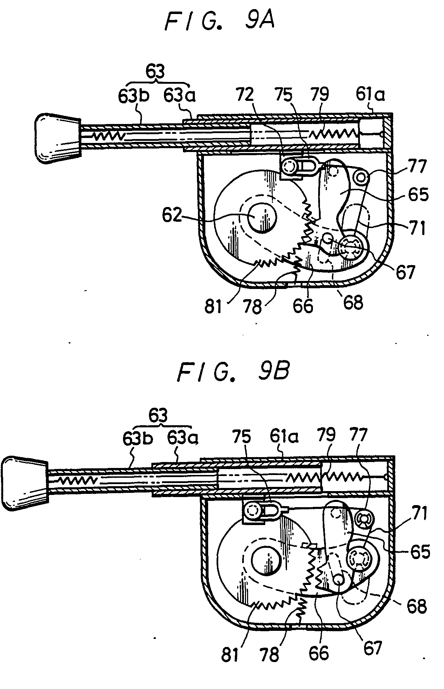

From this state, if the handle 63 is drawn out half-way or the inner cylinder 63b is drawn out, in association therewith, the outer cylinder 63a is drawn out a little and the protruded piece member 72 is moved forward. In this case, however, the moved amount of the protruded piece member 72 is small so that the pin 74 is only moved to the front end portion of the long opening ring 75 of the wire assembly 71 within the hollow space and thus no traction is applied to the wire asembly 71. As a result, the guide bracket 66 and the lock gear 65 are not operated and thence the shaft 62 to be driven is kept in a locked state (Fig. 9A).

Next, if the handle 63 is drawn out at maximum, the outer cylinder 63a is drawn out by a predetermined length to thereby move the protruded piece member 72 forward so that the wire assembly 71 is drawn through the pin 74 to thereby rotate the guide bracket 66 upward against the biasing force of the spring 78. When the guide bracket 66 is rotated upward, since the pin 67 of the lock gear 65 is pressed by the edge portion of the deformed long opening 68 so that the lock gear 65 is rotated in the backward direction, or in the direction becoming distant from the fixed gear 81 and released from being engaged with the fixed gear 81, thus the shaft 62 to be driven being released from being locked (Fig. 9B).

Under this state, if the handle 63 is lifted upward or lowered, the shaft 62 to be driven is rotated through the base bracket 61 to thereby operate the adjusting mechanism which is coupled to the shaft 62 to be driven.

Under the state that the shaft 62 to be driven is rotated by a desired amount, if the handle 63 is released from the hand, the handle 63 is shortened by the biasing force of the spring 79 and then accommodated into the guide cylindrical portion 61a. In other words, while the inner cylinder 63b being inserted into the outer cylinder 63a, the outer cylinder 63a is inserted into the guide cylindrical portion 61a and thereby accommodated thereinto.

By virtue of this operation, the protruded piece member 72 is moved backward to thereby release the wire assembly 71 from being applied with the traction through the pin 74. Thus, the guide bracket 66 is rotated downward by the biasing force of the spring 78 and then returned to its original condition and in association therewith, the lock gear 65 is rotated forward by the engagement of the pin 67 with the long opening 68 and then engaged with the fixed gear 81 so that the shaft 62 to be driven is locked in the above rotation state, thus the adjusting mechanism being kept in its operation state.

When the adjusting mechanism is further changed from this operation state or returned to the original state once again, the lock releasing operation and the rotation operation of the aforementioned shaft 62 to be driven must be carried out.

While in the rotation adjusting apparatus 60 of the second embodiment, the guide bracket 66 which is engaged with the lock gear 65 so as to rotate the same is rotated by the sliding operation of the handle 63 through the wire assembly 71, it is possible that the sliding force of the handle 63 is directly transmitted to the guide bracket 66 so as to rotate the same as in a third embodiment.

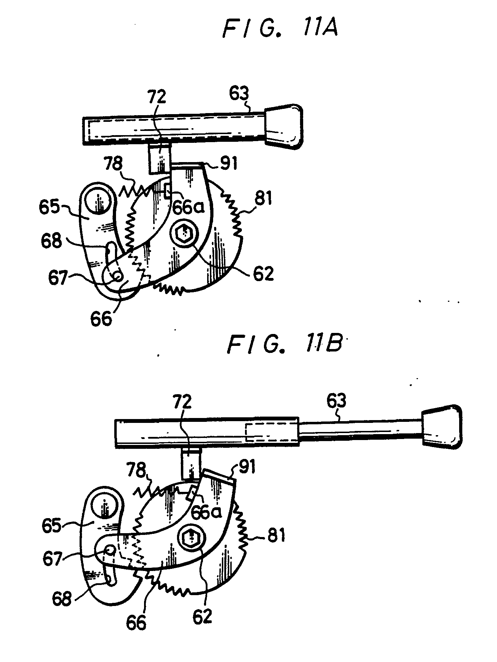

Fig. 10 and Figs. 11A and 11B are diagrams showing the above-described third embodiment of a rotation adjusting apparatus 90 according to the present invention. As shown in Fig. 10 and Figs. 11A and 11B, in their third embodiment, the wire assembly 71 in the above-mentioned second embodiment is not employed and the roller pin 70 of the guide bracket 66 and the pin 74 of the protruded piece member 72 protruded on the outer cylindrical casing 63a of the handle 63 in the second embodiment are also removed. On the other hand, the pivoted portion of the guide bracket 66 relative to the base bracket 61 is extended near the guide cylindrical portion 61a and a bent piece member 91 that corresponds to the front edge side of the protruded piece member 72 of the handle 63 is formed at the extend end portion. Further, an erected piece member 66a is protruded at the rear edge side of the extended portion of the guide bracket 66 and between the member 66a and the rear edge portion of the base bracket 61, there is stretched the spring 78 which always biases the lock gear 65 in the direction to the fixed gear 81. In this case, the pin 67 and the deformed long opening 68 which engage the lock gear 65 and the guide bracket 66 are put in the reverse relation to that of the former embodiments or the deformed long opening 68 is formed through the lock gear 65 and the pin 67 is planted on the guide bracket 66.

According to this arrangement, if the handle 63 is drawn out, the protruded piece member 72 is moved forward and contacts with the bent piece member 91 of the guide bracket 66 to rotate the bent piece member 91 in the down direction against the spring force of the spring 78. As a result, the rear end portion of the guide bracket 61 is rotated upward and by this rotation, the pin 67 presses the edge portion of the deformed long opening 68 and then is moved so that the lock gear 65 is rotated in the backward direction, or in the direction becoming remote from the fixed gear 81 and thus released from being engaged with the fixed gear 81 and the shaft 62 to be driven being released from being locked similarly to the above-described embodiments.

Further, if the handle 63 is slidably shortened, the protruded piece member 71 is moved in the backward direction, or in the direction becoming distant from the bent piece member 91 of the guide bracket 66 so that the guide bracket 66 is rotated downward and then returned to its original state by the biasing force of the spring 78 and in association therewith, the lock gear 65 is rotated forwards and then engaged with the fixed gear 81, thus the shaft 62 to be driven being put in the locked state.

The rotation adjusting apparatus 90 constructed as mentioned above can be applied to the adjusting apparatus for operating the adjusting mechanism such as the lifter mechanism of the seat and the like and which can lock the same at the desired position.

While in the first, second and third embodiments of the invention, the handles 4 and 63 are each formed as the two-stage telescope type of the counter cylinder and the inner cylinder, it is possible that the handles are each formed as a telescope type one having more than two stages. Further, the handles may be each formed as a rod-shape member or cylindrical shape member. When the handle 63, by way of example, is formed by one rod-shape member, the handle extension length and the movable length of the piece member 72 which operates the guide bracket 66 become equal to each other, so that the handle extension length or drawn-out length of the handle 63 can be made shorter than that of the telescope type one in a mechanical standpoint.

In addition, the positional relation between, for example, the lock gear 65 and the guide bracket 66 relative to the fixed gear 81 may be reversed, or they may be positioned at the front side of the fixed gear 81 and the tooth portion of the fixed gear 81 is not necessarily formed around the whole of the periphery thereof but may be formed in accordance with the rotational range of the shaft 62 to be driven. Other portions and members are not limited to those of the above-described embodiments but can take various modifications and variations.

As set forth above, according to this invention since the shaft to be driven which is coupled to the adjusting mechanism of the seat is put in its locked state by the engagement of the fixed gear and the lock gear, the shaft to be driven is accurately locked at the desired rotation position. Accordingly, if impact force or load is applied to the side to be driven, it can be held in the desired position without being wobbled, slipped and so on. Further, the lock releasing operation is carried out by the sliding operation of the handle and after the lock releasing operation was made, no resistance force and action is applied to the shaft to be driven so that the operation force can be reduced and the rotational operation of the side to be driven can be carried out smoothly. In addition, the rotation adjusting apparatus of this invention is simple in construction and the number of the assembly parts thereof can be reduced, thus the manufacturing cost thereof being lowered.

The above description is given in the preferred embodiments of the invention, but it will be apparent that many modifications and variations could be effected by one skilled in the art without departing from the scope of the novel concepts of the invention, so that the scope of the invention should be determined by the appended claims only.

## Claims

1. A seat adjusting apparatus comprising
a) a base bracket (2; 61) fixed for common rotation to a seat adjusting shaft (3; 62),
b) a non-rotatably provided gear (21; 81),
c) a lock gear (6; 65) rotatably supported by the base bracket (2; 61) and engageable with the non rotatable gear (21; 81),
d) a guide bracket (7; 66) rotatably supported by the base bracket (2; 61),
e) an extendable handle (4; 63) being slidably supported by a cylindrical guide member (2a; 61a) of said base bracket (2; 61),
f) means (8; 67) for coupling the guide bracket (7; 66) to the lock gear (6; 65)
g) and means (12, 13; 71, 72; 72, 91) fixed to the handle (4; 63) for rotating the guide bracket (7; 66) and for releasing the engagement between the lock gear (6; 65) and the non rotatable gear (21; 81) when the handle is extended.

2. A seat adjusting apparatus as claimed in claim 1, in which said guide bracket (7) is provided with a cam surface (12) and said means for rotating said guide bracket (7) include a roller (15) which is slidably moved in contact with said cam surface when said handle (4) is extended.

3. A seat adjusting apparatus as claimed in claim 1 in which said guide bracket (66) is provided with a pin (67) which is slidably in contact with an opening (68) of said lock gear (65).

4. A seat adjusting apparatus as claimed in claim 1, in which said handle (4) is formed of an outer cylinder (4a) and an inner cylinder (4b) which are coupled in a telescope fashion.

5. A seat adjusting apparatus as claimed in claim 1, in which said means for rotating the guide bracket (66) comprise a wire (71), one end of which being engaged with said handle (63) with a predetermine clearance.

6. A seat adjusting apparatus as claimed in claim 1, in which said guide bracket (66) and said coupling means (67) are formed integral and one end portion (91) of said guide bracket (66) is engaged with said rotating means (72) when said handle (63) is extended.

## Patentansprüche

1. Vorrichtung zur Sitzeinstellung, enthaltend
a) einen Grundrahmen (2; 61), der mit einer Welle (3; 62) zur Einstellung des Sitzes so verbunden ist, daß er gemeinsam mit dieser drehbar ist,
b) ein nicht drehbar angeordnetes Zahnrad (21; 81),
c) ein drehbar am Grundrahmen (2; 61) gehaltertes und in das nicht drehbare Zahnrad (21; 81) eingreifendes Arretierungselement (6; 65),
d) einen drehbar am Grundrahmen (2; 61) gehalterten Führungsarm (7; 66),
e) einen ausziehbaren Griff (4; 63), der gleitbeweglich durch einen zylindrischen Führungsteil (2a; 61a) ds Grundrahmens (2; 61) getragen wird,
f) Einrichtungen (8; 67) zur Verbindung des Führungsarmes (7; 66) mit dem Arretierungselement (6; 65),
g) am Griff (4; 63) befestigte Einrichtungen (12, 13; 71, 72; 72, 91) zur Drehung des Führungsarmes (7; 66) und zum Lösen des Eingriffs zwischen dem Arretierungselement (6; 65) und dem nicht drehbaren Zahnrad (21; 81) bei ausgezogenem Griff.

2. Vorrichtung nach Anspruch 1, dadurch gekennzeichnet, daß der Führungsarm (7) eine Führungsfläche (12) aufweist und die Einrichtungen zur Drehbewegung des Führungsarmes (7) eine Rolle (15) enthalten, die in Gleitberührung mit der Führungsfläche gebracht wird, wenn der Griff (4) ausgezogen wird.

3. Vorrichtung nach Anspruch 1, dadurch gekennzeichnet, daß der Führungsarm (66) mit einem Zapfen (67) versehen ist, der verschiebbar mit einer Aussparung (68) des Arretierungselementes (65) in Verbindung steht.

4. Vorrichtung nach Anspruch 1, dadurch gekennzeichnet, daß der Griff (4) durch einen äußeren Zylinder (4a) und einen inneren Zylinder (4b) gebildet wird, die teleskopartig miteinander verbunden sind.

5. Vorrichtung nach Anspruch 1, dadurch gekennzeichnet, daß die Einrichtungen zur Drehbewegung des Führungsarmes (66) ein Kabel (71) enthalten, dessen eines Ende mit einem vorbestimmten Spiel mit dem Griff (63) verbunden ist.

6. Vorrichtung nach Anspruch 1, dadurch gekennzeichnet, daß der Führungsarm (66) und der Zapfen (67) aus einem Stück gebildet sind und das eine Ende (91) des Führungsarmes (66) mit der Einrichtung (72) zur Drehbewegung des Führungsarmes bei ausgezogenem Griff (63) in Eingriff kommt.

## Revendications

1. Dispositif de réglage de siège comprenant:
   a) un support de base (2; 61) fixé à un arbre de réglage de siège (3; 62) en vue d'une rotation commune avec celui-ci;
   b) un élément denté non rotatif (21; 81),
   c) un élément denté de verrouillage (6; 65) supporté à rotation par le support de base (2; 61) et apte à venir en prise avec l'élément denté non rotatif (21; 81),
   d) un support de guidage (7; 66) supporté à rotation par le support de base (2; 61),
   e) une poignée extensible (4; 63) supportée à coulissement par un élément de guidage cylindrique (2a; 61a) dudit support de base (2; 61),
   f) des moyens (8; 67) pour accoupler le support de guidage (7; 66) avec l'élément denté de verrouillage (6; 65),
   g) et des moyens (12, 13; 71, 72; 72, 91) fixés à la poignée (4; 63) pour faire tourner le support de guidage (7; 66) et désaccoupler l'élément denté de verrouillage (6; 65) et l'élément d'engrenage non rotatif (21; 81) lorsque la poignée est mise en extension.

2. Dispositif de réglage de siège selon la revendication 1, dans lequel ledit support de guidage (7) est muni d'une surface de came (12) et en ce que lesdits moyens pour faire tourner ledit support de guidage (7) comprennent un galet (15) déplacé par coulissement pour venir en contact avec ladite surface de came lorsque ladite poignée (4) est mise en extension.

3. Dispositif de réglage de siège selon la revendication 1, dans lequel ledit support de guidage (66) est muni d'un axe (67) en contact coulissant avec une ouverture (68) dudit élément denté de verrouillage (65).

4. Dispositif de réglage de siège selon la revendication 1, dans, lequel ladite poignée (4) est constituée par un cylindre externe (4a) et un cylindre interne (4b) accouplés de manière télescopique.

5. Dispositif de réglage de siège selon la revendication 1, dans lequel lesdits moyens pour faire tourner le support de guidage (66) comportent un fil métallique (71) dont l'une des extrémités est en prise avec ladite poignée (63) suivant un jeu prédéterminé.

6. Dispositif de réglage de siège selon la revendication 1, dans lequel ledit support de guidage (66) et lesdits moyens d'accouplement (67) sont formés de manière solidaire et en ce qu'une partie d'extrémité (91) dudit support de guidage (66) est en prise avec lesdits moyens de rotation (72) lorsque ladite poignée (63) est mise en extension.

# FIG. 1

# FIG. 5

1

FIG. 2

## FIG. 3

## FIG. 4

## FIG. 6

FIG. 7

FIG. 10

FIG. 8

60

## F I G. 9A

## F I G. 9B

## FIG. 11A

## FIG. 11B